# EUROPEAN PATENT APPLICATION

(11) **EP 4 733 438 A1**
(43) Date of publication of application: **29.04.2026**
(21) Application number: 24825380.9
(22) Date of filing: 18.06.2024
(51) Int. Cl.: C25B 1/04, C25B 11/031, C25B 11/051

(54) **METHOD FOR PRODUCING AND STORING HYDROGEN BY MEANS OF HETEROGENEOUS CATALYTIC ELECTROLYSIS AND DEVICE FOR THE METHOD**

(30) Priority: 20.06.2023 ES 202330514
(71) Applicant: Torrecilla La Rodriguez, Luis Manuel, 08293 Collbato Barcelona (ES)
(72) Inventor: Torrecilla La Rodriguez, Luis Manuel, 08293 Collbato Barcelona (ES)
(74) Representative: Espiell Gomez, Ignacio
(86) International application number: PCT/ES2024/070379
(87) International publication number: WO 2024/261365

(57) **Abstract**

The invention relates to a method for producing and storing hydrogen by means of heterogeneous catalytic electrolysis and to a device for the method. The invention specifically concerns the electrolysis of freshwater or seawater (H₂O) by means of direct current using electrodes (6, 7) having a structure defined by a porous substrate (8), preferably activated carbon, and a semiconductor formed by a coating layer (9) of oxides, nitrides or hydroxides of transition metals, preferably titanium dioxide, with a valence band energy level substantially below the oxidation potential of H₂O and a conduction band energy level above the reduction potential of hydrogen in the standard hydrogen electrode (SHE), allowing dynamic H₂ generation and static H₂ generation involving simultaneous storage with cumulative electronic capacitance.

## Description

### OBJECT OF THE INVENTION

As indicated by the title of the present specification, the invention, relates to a method for producing and storing hydrogen by means of heterogeneous catalytic electrolysis, and to a device for carrying out said method, contributing to the function for which it is intended, advantages and features which are described in detail below, and which represent an improvement on the current state of the art.

The object of the present invention is an oxidation-reduction method for producing hydrogen based on a highly efficient heterogeneous catalytic electrolysis of water, both freshwater and seawater, which, preferably comprising a direct current power source obtained from renewable and sustainable energy sources, is essentially distinguished in that it comprises the use of electrodes with a very rough micropore structure, more specifically, in that it comprises a porous substrate, preferably activated carbon, and a semiconductor formed by coating layer of the porous substrate based on oxides, nitrides or hydroxides of transition metals, preferably a titanium dioxide layer, in any case with the valence band energy level substantially below the oxidation potential of H₂O and with the conduction band level above the reduction potential of hydrogen in the standard hydrogen electrode (SHE), which facilitates water oxidation at the anode and hydrogen reduction at the cathode during the electrolysis process, advantageously allowing both dynamic H₂ generation and static H₂ generation involving simultaneous storage with cumulative electronic capacitance of H₂. Furthermore, said TiO₂ coating layer is preferably applied by means of a multi-arc physical vapour deposition or PVD technique to a portion or half of the porous substrate, allowing both dynamic H₂ generation and static H₂ generation involving simultaneous storage with cumulative electronic capacitance, providing, compared to currently known electrolysis technologies, a more effective result in terms of faradaic and energy efficiencies, as well as lower production costs, which translates into a competitive and highly profitable technology for producing hydrogen. A second aspect of the invention relates to an electrolyser device whereby said method for producing hydrogen is carried out.

### FIELD OF APPLICATION OF THE INVENTION

The field of application of the present invention is in the field of chemistry and physics, focusing in particular on the area of technologies for producing and storing hydrogen from freshwater or salt water based on electrolysis.

### BACKGROUND OF THE INVENTION

The world today is experiencing one of the most acute crises in its entire history. This crisis manifests itself in two different areas which, to a certain extent, are opposed in their aims and, due to their scale and level of importance, are linked and equally relevant to humanity: the energy crisis and climate change.

A report by IRENA (International Renewable Energy Agency) and the EPO (European Patent Office) dated 12 May 2022 states:
"Patent applications for hydrogen production technologies have grown by an average of 18% each year since 2005 in Europe."
"Similarly, in 2018, inventions of electrolysers based on cheap minerals surpassed those based on more traditional or expensive electrolysers. Examples of this are those using gold, silver, platinum or other noble metals."
"On the other hand, the report showed that an above-average number of international patent families are related to photoelectrolysis. In this regard, approximately 50% are filed by universities."
"The demands for cleaner energy have never been greater. Although patent applications show a sharp increase, the report stresses that significant innovations in electrolyser technology are still needed to further reduce their costs and prepare them for the market at industrial levels," IRENA mentioned.

After a detailed study of the technologies currently related to electrolysis, a series of deficiencies and negative aspects can be listed, the analysis of which has led to the development of the present invention. Some of these aspects in the state of the art are set out below.

In a high percentage of traditional techniques, electrolysis technologies with proton exchange membranes (PEM) use expensive materials and precious metals in the cathodes, namely, Pt, Pd, Ir, Ru, Rh, Au, etc.

The efficiency of conventional electrolysers is around 60% at best, with the rest of the electrical energy used to split the water being lost in overvoltage, heat, recombination and other losses.

The pressures required to obtain the aforementioned or higher yields are very high, subjecting the electrolyser to extreme load conditions and the materials involved in its structure to wear and deterioration, which affect the device's service life and performance. Typical pressures for these electrolysers can range from 30 to 300 bar, which are very high.

Some electrolyser technologies, such as solid-state technologies, operate at very high temperatures, which can reach 800°C, which also causes deterioration in the electrolyser. These temperatures are also unstable, with sudden fluctuations, which cause fatigue in the device's components and, consequently, affect its durability.

Above all, high temperatures and pressures cause rapid deterioration of the H₂ and O₂ separating membranes and diaphragms and allow these gases to mix (a phenomenon known as crossover), both inside and outside the electrolyser, with the subsequent danger of the mixture exploding.

The poor performance of conventional electrolysers and the shortage of the materials used in their construction result in a high cost of H₂ produced by water electrolysis, which has forced the use of other contaminating supply sources that do not solve the main underlying problem, which is environmental decontamination and the effects of climate change on the planet.

A large number of cathodes, anodes and separating membranes are used, involved in elements connected in series called stacks, due to the need to increase the surface area for exchange and electron delivery during the oxidation-reduction of H₂O. This increases the cost of the device.

Current densities are low, especially in alkaline electrolysers, within lower and upper limits, with the aim of preventing the mixing of H₂ and O₂ and, therefore, part of the energy produced is lost. For this reason, these electrolysers do not accumulate the energy supplied to them in the form of H₂, so for that purpose (for H₂ storage), they require additional batteries or accumulators in the form of pressure tanks, cryogenic tanks or metal hydride storage facilities.

The high current densities required to achieve average efficiency (A/cm²) cause corrosion and deterioration due to abrasion of the working surfaces, reducing the service life of the electrolyser.

However rough the anode and cathode surfaces of conventional electrolysers may be, as these elements are manufactured from compact stainless steel metals, they are always insufficient to provide high H₂ and O₂ production, which requires the use of a large number of cell stacks. As mentioned above, this makes the electrolyser more expensive, heavier and more difficult to handle, with the subsequent drawbacks that this entails when carrying out maintenance, repairs and replacement of construction elements. Moreover, the process of water electrolysis itself depends significantly on the quantity and size of the working surface of the electrodes. There is even a globally standardised parameter by which an electrolyser is evaluated as efficient according to the high current density to which the electrodes are subjected. The higher this density, the more effective the electrolyser. However, this is at the expense of the service life of these components.

In conclusion, it can be said that the number of constructive factors, working characteristics and efficiency parameters of electrolysers directly determine the production costs of H₂ by H₂O electrolysis and, consequently, set its market price. As a result, the problem of profitability in obtaining H₂ by water electrolysis today is far from being solved, which makes the produced green H₂ very expensive and not competitive with other H₂ production technologies, such as those that use polluting and CO₂-generating sources, which exacerbate the problems of environmental pollution and climate change and label the product with a specific colour. Such is the case with black or brown H₂, which results from the gasification of carbon as a non-renewable fuel; grey H₂, which is obtained by passing natural gas through water vapour using the steam reforming technique; or blue H₂, which uses natural gas as a raw material.

For all these reasons, the objective of the present invention is the development of a novel advanced oxidation-reduction technology with green H₂ production by means of water electrolysis using renewable energies as a power source and a generation means based on porous substrates coated with oxides, nitrides or hydroxides of transition metals, which, in addition, can be marketed at very competitive costs and prices, without the use of precious and expensive metals and with high generation efficiency in terms of both faradaic and energy efficiencies, as well as the capacity to store both the H₂ produced and electronic energy.

### DESCRIPTION OF THE INVENTION

The method for producing hydrogen and the device for carrying out said method proposed by the invention are configured as the ideal solution to the aforementioned objectives, where the characterising details which make this possible and distinguish them are set out in the final claims accompanying this description.

Specifically, as noted above, the present invention proposes a method for producing hydrogen (H₂) by means of catalytic electrolysis of water, both freshwater and salt water, by an oxidation-reduction mechanism with both dynamic H₂ generation and static H₂ generation involving simultaneous storage with cumulative electronic capacitance, which, preferably being a method for producing green hydrogen, in other words, by means of a power supply obtained from renewable and sustainable energy sources, is distinguished by the fact that it is based fundamentally on a mechanism of electrodes with a very rough micropore structure that guarantees a high number of active centres participating in the electrocatalytic oxidation-reduction process.

To do this, and more specifically, said electrodes essentially comprise a semiconductor of oxides, nitrides or hydroxides of transition metals, preferably titanium dioxide (TiO₂), with a valence band energy level substantially below the oxidation potential of H₂O and with the conduction band level above the reduction potential of hydrogen in the standard hydrogen electrode (SHE), and a porous substrate, preferably granular and powdered activated carbon, and wherein said TiO₂ semiconductor is supported by multi-arc physical vapour deposition (PVD) on the porous activated carbon substrate as a coating layer deposited on a portion of the grain or on half of it.

In turn, second aspect of the invention relates to an electrolysis device which, essentially and in a known manner, consists of a body that may or may not be airtight, although it is preferably airtight, with connections for the inlet of water or electrolyte and the outlet of the gases generated; where said body, which may be cylindrical or tetrahedral or of any other volumetric shape, has electrodes which are connected to a direct current power source and under a potential slightly higher than the potential of decomposition of water (H₂O) into its constituent elements, H₂ and O₂. This potential, as is well known, corresponds to the Gibbs free energy and is equal to that obtained in the combustion of H₂ in an O₂ atmosphere or the enthalpy of formation Hu=-285.9 Kj/mol. The energy is 1.23 eV per water molecule.

However, it should be emphasised that, under real conditions, this potential needs to be substantially higher due to the characteristics of all electrode materials to retain electronic charges on their surface, in correspondence with the attraction exerted on them by the nucleus. These valence electrons must leave the surface in order to act in the reduction of the H+ hydrogen produced after the H₂O is oxidised, forming, in this act, the H₂ molecule that is released as a stable gas into the environment. This extra potential is called electrical overpotential. Similarly, for the oxidation of H₂O, the positive valences must overcome the attractive forces that retain the electrons in the bond with the oxygen of the water molecule.

The electrical overpotential differs depending on the electrode material used in the oxidation-reduction described and, in all cases without exception, is greater than that of water. However, the magnitude of this overpotential depends on whether the H₂O decomposition process is more or less costly. As the required potential increases, so does the cost of electrolysis. Among the materials with the lowest delivery overpotential used in the current state of the art are Pt and other precious metals, such as Pd, Ru, Rh, and Ir, mentioned in the preceding section, which are in short supply and expensive, making electrolysis costly. This situation has led to the search for solutions and alternatives using other materials and alloy combinations in order to achieve the most suitable and lowest possible potential and reduce the cost of H₂ production.

Pt and the other precious metals mentioned act as catalysts in the reaction described and are preferred for this function. One of the most important characteristics that a good catalyst must have is a large outer surface, which will be in direct contact with reactants and reagents and will allow for a large number of active centres that will be executing the oxidation-reduction reactions in unison. That is why the method and the electrolyser device object of the present invention provides for the use of a porous substrate, preferably and without limitation, a granulated or powdered activated carbon substrate with the desired characteristics, as it has one of the largest known surface areas, which can be from 500 up to 6000 m² per gram of material.

On the surface of this material, which is a good conductor of electricity, thus meeting another of the requirements for the electrodes of the device object of the invention, an oxide of a transition metal with excellent qualities as a catalyst is deposited, and it can be any of the transition elements described in the periodic table, including: V, Cr, Mn, Fe, Co, Ni, Cu, Zr, Nb, Mo, Tc, Ru, Rh, Ag, Hf, Ta, W and others. However, preferably but without limitation, the oxide used is titanium oxide. Thus, the method and device of the invention preferably use activated carbon as a substrate and titanium dioxide as a catalyst, the latter being strongly anchored to the surface of the former, but without ruling out the use of other non-conductive substrates, to which a conductive coating will be applied and, on top of this, the layer or layers of catalyst oxides will be deposited. The preferred metal oxide is TiO₂.

For non-conductors, the coating method would involve two layers: a conductive layer covering the entire surface of the substrate with a conductive metal or polymer and, secondly, the partial or half coating of the grain with the nanostructured semiconductor which have been mentioned (oxides, nitrides and hydroxides of transition metals).

Moreover, TiO₂ is an oxide which can possess three states of aggregation in its crystal structure: rutile, anatase and brookite. The preferred aggregation form in the present invention is TiO₂ anatase, although any of the above three or an amorphous form can be used, or a combination of two or all three of same.

Anatase TiO₂ is the preferred form because, among other important properties, it has some that are highly relevant and necessary for achieving the objectives of the present invention, such as the following:
- it has a highly spongy structure, which further increases the possibilities of catalysis by increasing the surface area of the substrate on which it is deposited up to 1000 times its size;
- it exhibits chemical stability during oxidation-reduction reactions, durability and high hardness, which gives it high resistance to abrasion and corrosion by most known acidic and alkaline agents, regardless of their pH;
- it has ideal levels for the decomposition of water, as the valence band energy level is below that of H₂O in the oxidation half-reaction and the conduction band energy level is above that of H₂ reduction in the reduction half-reaction, according to the standard hydrogen electrode (SHE) energy level, so it can efficiently oxidise H₂O to form O₂ at the anode and reduce H+ with equal efficiency to form H₂ at the cathode;
- it is highly oxidising, since the bonding of an n-type semiconductor, such as anatase TiO₂, with a metal (in this case, carbon has a metallic nature due to its electronic characteristics) produces a low-voltage barrier at the metal-semiconductor bond interface, where, by equalising the Fermi energy levels and because TiO₂ has a much lower work function than the metal, there is a flow of electrons from the semiconductor to the carbon, which decreases the electron delivery overpotential in forward bias and obstructs it in reverse bias. This barrier is called the Schottky barrier. This phenomenon is essential when it comes to using optimal energy, which at the same time remains low during electrolysis, resulting in greater energy efficiency. In turn, on the surface of the semiconductor, this phenomenon of charge redistribution favours, to the same extent, the level of water oxidation due to the presence of highly oxidising gaps that maintain their high energy level in the absence of short circuits and prevent their recombination with electrons, a phenomenon that is recognised as adverse in electronic, photovoltaic and photocatalytic mechanisms. As there is potential barrier isolation (Shottky in this case), the semiconductor's conduction band also maintains its high reduction potential to reduce H+ protons to H₂.

Furthermore, the deposition of anatase, characterised as mesoporous, on a microporous surface such as activated carbon allows small molecules, such as H₂, to pass through, while partially closing the entrances to the micropores of the activated carbon, hindering the passage of larger molecules such as water. This means that this hydrogen has a greater chance of passing into the micropores of the activated carbon structure and fulfilling a very important function in the process and the device, namely the temporary storage of H₂.

On the other hand, it cannot be ruled out that the deposition of TiO₂ can be carried out by any other traditional deposition method, such as thermal deposition, reactive sputtering, chemical vapour deposition (CVD), spin coater, sol-gel, electroplating, atomic beam epitaxy, molecular beam epitaxy, plasma-assisted CVD, etc. However, the preferred method is multi-arc PVD (physical vapour deposition), as this coating technique has characteristics that are superior to other known techniques, including strong anchoring and penetration of the semiconductor layer on the activated carbon substrate, thanks to a prior scrupulous and intense atomic-level plasma bombardment, which eliminates any type of foreign or extraneous element from the deposited layer that could subsequently remain on the surface of the substrate, hindering the semiconductor-metal bond or causing the supported layer to detach, thereby poisoning the catalyst and partially or terminally degrading or damaging its functions. This intense bombardment leaves the valences of the atoms of the substrate in the crystal lattice thereof completely free, with no intermediaries to weaken a strong bond with the semiconductor to be deposited. This also ensures high abrasion resistance and hardness, which is very important to consider when there are both liquid and gaseous flow movements in a mechanism. On the other hand, due to the high energies of a low-pressure electric arc floating above the cathode face during deposition, the Ti+ ions are ejected or sublimated from it at a very high speed, allowing the metal deposited on the substrate to literally embed itself, establishing a strong anchoring and bond between the parts involved. Similarly, the presence of third elements can significantly hinder the aforementioned energy levels of charge exchange, which is sufficiently remedied by prior ion bombardment and subsequent deposition.

Furthermore, the method object of the present invention has other advantages, including the following:
In the electrolysis method, the process of absorbing H₂ in the micropores, after it has been generated, is an exothermic phenomenon, with a decrease in the enthalpy of the system, due in turn to the marked decrease in the entropy of the gas, which promotes the harnessing of the energy supplied for electrolysis from the power source and increases this energy, producing a high and increased faradaic and energy efficiency of the process.

It should be noted that the conformation of the potential barrier mentioned in the semiconductor-activated carbon interface can promote a concentration of charges on the surfaces, which, as they belong to nano- and micro-structured reliefs, can contribute to a capacitive effect of charge retention and storage, a phenomenon that would contribute to the temporary storage of H₂, as well as electrons. This phenomenon occurs markedly in the electrolyser object of the invention, causing, at the start of operation, on the one hand, the storage of a large amount of H₂ (even greater than the amount of H₂ that is dynamically released while the electrical potential is applied) and, on the other hand, an overflow of electrons, which goes so far as to increase the potential of the power supply and the current through the electrical circuit. This phenomenon is of great importance, as the applicant, at least, is unaware of there being any evidence that it has been detected or experienced previously. The phenomenon of production with low overpotentials and the capacitive nature of the method and the electrolyser object of the invention is present throughout the entire operating time of the system, to the point of replacing the delivery capacity with that of capacitance and H₂ storage and maintaining such high energy and faradaic efficiency that it exceeds the percentages existing on the market, especially faradaic efficiency.

Another advantage is that the retention of large quantities of H₂ allows the electrolyser device to be located in a sump and increases the energy efficiency of H₂ production. At the same time, however, it complements a function that is no less important in green H₂ technology, which is the storage and conservation of the energy vector for later use as an energy source, at the specific moment when it is needed.

With the above point, the function of the electrolyser object of the present invention is therefore twofold and closes the cycle of production and use of H₂ as an energy vector. It therefore constitutes a system capable of efficiently producing H₂ and storing the H₂ produced, as well as electricity, and conserving these vectors until they are used in combustion media or fuel cells.

To do this, the method involves placing the active carbon substrate to be coated in a suitable PVD reactor. This activated carbon can be any carbon used on the market, whether plant-based or mineral-based, preferably in the form of granules or powder, which ensures a large catalytic surface area and the formation of an immense number of active centres, which will transport charges, perform redox functions, store molecules and electrical charges, and deliver the harvest of H₂ and O₂ to the environment, immediately returning to their original state, ready to repeat the process infinitely, with the greatest speed and efficiency.

The PVD reactor for coating this type of substrate, as can be understood, is a special reactor, designed and manufactured specifically to coat granules or powders, which cannot be held in suspension in the air or atmosphere of the chamber thereof, as the force of gravity would cause them to fall to the floor and they would not be coated, so the usual PVD reactors used on the market would not be suitable. Therefore, the method object of the invention involves the use of a completely novel type of reactor. In commercially available reactors used in the coating of solid parts, said parts are hung and held at a height with rotating and planetary devices, which keep them fixed in the reactor chamber. In this position, they are spun and passed in front of the metallic-gaseous plasma, which covers them almost entirely. The process is therefore directional and not volumetric.

However, the coated activated carbon particles can have millimetre dimensions, for example 2 to 3 mm, although particles of any other size may be used, including micrometre dimensions, represented by activated carbon powder, which can further increase the catalytic surface area, although on the other hand it increases the requirements for airtightness and sealing, to prevent possible leaks of particles from the electrolyser.

In a preferred embodiment of the method object of the invention, the conformation of the electrodes comprises the following steps. The previously cleaned activated carbon is spread out on a tray that is suitable for the dimensions of the reactor chamber, preferably using ultrasound technology and air drying or drying in muffle furnaces or drying ovens. To do this, the activated carbon is placed in a single layer, evenly, without intergranular spaces or with very small ones. Once filled, the tray is placed in the preheating muffle furnace and the load is subjected to a high temperature, which can be between 80 and 350°C, although preferably between 200-250°C, to prevent combustion and oxidation of the activated carbon. With this heating regime, during the established time, total dehumidification and dehydration of the substrate is achieved.

Once heated, the tray is placed in the reactor chamber and the PVD coating process is carried out.

Finally, the coated substrate is mounted in the electrolyser device.

In turn, the device can have different designs.

Thus, preferably, although not exclusively, the electrolyser construction is a block system.

More specifically, the device provides for, in a known way, as first generation electrodes for electrolysis, an anode or positive pole, where water oxidation will take place with oxygen release, and a cathode or negative pole, where hydrogen reduction will take place. These electrodes are connected by means of cables to the electric power source, and the circuit of the system is closed through the second generation electrode which is made up of the water itself, as a source of H₂ and an electrolyte that acts as a charge carrier between anode and cathode.

Furthermore, on the basis of said known configuration, the electrolyser device object of the present invention is distinguished, essentially, in the structural configuration of the first generation electrodes, which are composed of the porous substrate described above, preferably activated carbon, coated with the titanium dioxide layer in its allotropic form of anatase. This layer is preferably deposited by means of the physical vapour deposition (PVD) technique, as noted.

Preferably, the grains of the substrate are only partially or half coated, which guarantees a dual structure that ensures a redistribution of charges between the semiconductor and the porous material and a potential barrier at the interface with the delivery of charges from the semiconductor to the metal during the Fermi energy level equalisation process. This ensures efficient charge exchange during electrolysis, increasing it by reducing the overpotential levels required during processes of this type.

The structural conformation of the block electrolyser can be, in one embodiment, that of a body in the form of a trough or tank with electrically insulating walls (which may be made of stainless steel with an internal coating of a non-conductive material, such as rubber, acrylic, etc.), in which a plurality of perforated metal plates are placed at an optimal separation and the spaces between them are filled with coated carbon. The spaces must ensure good conductivity of the electrical charges through the substrate and the amount of this must be as large as possible, in accordance with the harvest of H₂ that is set as the target, but ensuring the best conductivity of the electrical charges. The trough can also be made of plastic, acrylic, glass and other materials.

The metal plates are connected to a cable or connection rod and, together with the coated carbon, form a block that acts as a common electrode, positive or negative, in accordance with the oxidation or reduction function assigned to this block in the electrolyser.

Said blocks, therefore, are two in number and define respective independent cavities that are located separated from each other by intermediate space filled with the electrolyte.

Furthermore, in a preferred embodiment, an ion separating membrane, preferably a Nafion-type membrane, is incorporated approximately at the centre of said intermediate space in the case of an alkaline electrolyser, although a variant without a membrane is optionally provided, in which case the separation of the blocks themselves acts as a separator of the gases obtained. The preferred variant, however, is with said Nafion separating membrane.

The separation of electrodes into blocks ensures the inhibition of charge recombination, a phenomenon that is very common in redox reactions and photovoltaic mechanisms, which is highly detrimental and responsible for the inefficiency of these systems. At the same time, it also prevents the mixing of the gases produced, H₂ and O₂, which can be dangerous and even explosive. This latter phenomenon is known as crossover and is an essential indicator of electrolytic mechanisms. This mixing must be as minimal as possible.

In other embodiments of the device of the invention, a series configuration of electrodes instead of a block configuration, i.e., with anodes sequenced from cathodes with or without a separation between them, and with the Nafion membrane or a mesh insulation between them that prevents short-circuiting between anode and cathode, is provided.

In other embodiments of the device of the invention, the configuration of anodes and cathodes in pairs, trios, quartets or any other type of grouping is provided, maintaining the requirement of insulation between anode and cathode to free the system from electrical leaks or short circuits that are detrimental to the efficiency of the electrolyser.

It should be noted that, optionally, instead of a Nafion-type membrane, other types of separator membranes, such as PEM (proton exchange membranes) or anion exchange membranes (AEM), may be incorporated in the separation between the electrodes.

In any case, said electrodes comprise porous substrates coated with the layers described above, as a base for efficient harvesting and release of charges with corresponding production of H₂ and O₂ regardless of the separating membrane system and even, as noted above, without separating membranes.

The justification for the preceding paragraph lies in the fact that the gases produced, H₂ and O₂, when circulating, so to say, together through the porous substrate, do not react with each other, so the structural content of the electrolyser acts as a "flame arrestor" system, inhibiting possible ignition or explosion. Ignition could only occur intentionally and only at the outlet of the electrolyser itself, i.e. in a programmed manner.

Finally, the block electrolyser is closed with a lid equipped with through holes for the evacuation of the gases produced through tubes and hoses. These holes are sealed accordingly, as are the electrical conduits connecting the electrolyser to the power source. Optionally, the hole in the cavity of the anode, where O₂ is generated, can be opened to the atmosphere if necessary.

On the other hand, the electrocatalyser device of the invention, in addition to having TiO₂ electrodes supported on activated carbon, in other alternative embodiments, may include electrodes with other variants of oxides, nitrides or hydroxides of transition metals, and likewise, the body of the device may have other design and construction variables which, for example and without limitation, may be the following:
- In the form of single cells, that are circular, hexagonal, square, octagonal or other polygon types in general, electrically connected by means of single pole or double pole plates in series or in parallel, to obtain the classic cell stack structure. In said option, the plates that act as positive and negative electrodes are, in turn, made up of perforated strips and fine meshes that cover the activated carbon substrate and are separated by a Zirfon^{®}-type polymer membrane that prevents the mixing of the H₂ and O₂ products obtained, which are released, as explained above, in the chambers thus separated from the anode and cathode. The presence of the coated carbon substrate substantially increases the surface area of the electrode. However, this substrate increases the dimensions of the electrodes, making them thicker, which means that this type of electrolyser takes up more space.
- In a honeycomb shape, with a structure consisting of a body or casing, inside which the electrodes (anodes and cathodes) filled with coated activated carbon are placed and separated by the membrane, which serves as insulation between them, allowing OH- ions to pass through and preventing H+ protons from passing through. In this option, the electrodes are constructed from concentric tubes neatly placed in the form of a honeycomb, inside which the electrolyte and the gases produced during electrolysis circulate. The electrodes, in turn, are connected to the positive and negative terminals of the power source. The electrolyte, an alkaline solution, is fed from a tank or external pump to a manifold of the electrolyser, from where it passes through the innermost perforated tube. Said electrode is connected to the positive pole of the electric power source. In this case, it acts as an anode. The water inside same oxidises and separates the O₂, which continues as a gaseous flow until it reaches the exhaust manifold, from where it is released into the atmosphere. The H₂ produced by the splitting of water is then generated at the cathode, where the electrons necessary for reduction arrive. This cathode consists of the concentric outer tube, separated from the anode tube by a coated carbon layer and the aforementioned membrane. The H₂ gas is collected in the other manifold, the exhaust manifold, and from there it is evacuated through pipes or hoses for storage or use.

In any case, the device object of the invention, in addition to the body of the electrolyser as such, also provides for the following:
- A direct current power source, preferably though not exclusively, with power from renewable, sustainable or alternative energy sources, such as: solar panels, hydroelectric sources, marine sources, including wave power, tidal power, sea temperature gradient power, marine current power, as well as wind power, geothermal power, etc., which ensures that the H₂ produced is green. The power supply potential for each cell must be higher than the characteristic delivery overpotential for the materials involved in electrolysis.
- Electrical interconnections.
- Electrical transformation, rectification, safety, control, and measurement equipment.
- Automation devices, if necessary.
- System for storing the H₂ produced and, if necessary, the O₂, if it is to be used in industry or medicine.

Said storage system can be for storage in gaseous form (regularly compressed, for which compression means are required, or without these means if H₂ or O₂, or both at the same time, are to be obtained in their natural state at atmospheric pressure), in liquid form by cryogenic storage in dewars, or in solid form in metal hydrides or microspheres. It should be noted that H₂ in the latter will be in gaseous form, even though it is called solid storage due to the reservoir that contains it. Storage in a solid state of aggregation, for which temperatures must be cryogenic, below -259.2°C, is not ruled out.
- For marine electrolysis or in freshwater reservoirs, rivers or lakes, if electrolysis needs to be carried out at depth to take advantage of the natural pressures found there, external compression systems may not be necessary. In this case, extraction, vacuum and pumping equipment may be required, depending on the function to be performed.
- Conveyance and evacuation pipes.
- Filtering and dehumidification means, separators, valves and purifiers.
- Cooling systems, demisters, water feed pumps and dryers.

Finally, it should be noted that the method and device object of the present invention provide for two H₂ generation regimes, one called dynamic hydrogen or H₂d, where the H₂ is immediately released during external electrical power supply as in classical electrolysers, and another called static hydrogen or H₂s, where H₂ is stored within the porous structure of the substrate during external electrical power supply, and even afterwards, due to the capacitive storage of electricity. The release of this H₂s therefore occurs after the electrical power supply as appropriate, either naturally, if the electrolyser is left freely exposed to the atmosphere, or in a forced manner, if an external force is used for its extraction, such as temperature, external agitation movements such as swaying, spinning, mechanical vibrations, blowing, suction, ultrasound, alternating drainage and pumping, and other methods. Extraction can also be produced by internal agents such as overpressure, due to the force of the gas itself if it is left closed (sealed as appropriate) for a period of time, with no outlet from the storage enclosure and subsequent release into the external environment.

With regard to the magnitudes of both types of hydrogen generation, dynamic H₂d and static H₂s, it should be noted that the static regime or H₂s can be equal to or substantially greater than the dynamic H₂d. The output of static H₂s can be regulated as appropriate, although there is generally always a positive capacitance magnitude in the electrolyser and a residual latent potential, which causes the generation of more H₂s.

The capacitance of the electrolyser device is gradually released, thanks to the adsorption forces acting on the hydrogen on the large surface area of the porous substrate; for this reason, the electrical discharge can be used, if necessary, to power an external consumer.

It should be noted that the gradual, non-instantaneous discharge means that the electrolyser of the invention acts as a genuine battery or accumulator. The accumulation charges in the electrolyser make it an accumulator integrated into its structure. This accumulation and residual electrical potential are stable over time, for the reasons given above, and can be stored for days, weeks and even months. During discharge at that time, they exhibit a continuation of the electrocatalysis process, releasing H₂ and O₂ without being connected to an external power source, so that the total H₂ production can exceed the pre-established faradic efficiency levels during electrical power supply and significantly increase the total energy efficiency.

The H₂ and O₂ generated in a static state, i.e., stored or retained in the porous structure, when immersed in the electrolyte, produce an upward force, according to Archimedes' principle. This force is opposite to the gravity of the electrolyser, so the actual weight of all the water consumed during the generation of hydrogen and oxygen and of the system in general is always greater than that calculated by the drop in the electrolyte level, i.e. by the volume multiplied by the density. The liquid level is always high because the stored gas bubbles do not allow the liquid to occupy the volume of gases trapped in the spongy structure.

In short, the method for producing and storing hydrogen by means of heterogeneous catalytic electrolysis object of the invention, specifically by means of the electrocatalysis of water (H₂O), both freshwater and seawater, for the decomposition thereof into oxygen (O₂) and hydrogen (H₂) by means of a direct electric current connected by means of electrodes to the water and/or an electrolyte or saline solution, is essentially distinguished by comprising, in said electrodes, preferably a very rough structure defined by a porous substrate, preferably activated carbon, and a semiconductor formed by a coating layer of the porous substrate based on oxide, nitride or hydroxide transition metals, preferably a titanium dioxide layer and, preferably, in its anatase form.

The porous substrate can consist of nano- and micro-structured reliefs, preferably in powder form. The most suitable granular variable has been chosen, as described above.

Furthermore, in said process, the mentioned TiO₂ coating layer is preferably applied by means of a multi-arc physical vapour deposition or PVD technique, preferably to only a portion or half of the porous substrate.

Preferably, the conformation of said electrodes with said very rough structure comprises at least one pre-drying phase for previously drying the activated carbon porous substrate prior to coating, preferably by means of ultrasound and air drying or drying in muffle furnaces or drying ovens, to achieve total dehumidification and dehydration of the substrate.

Once heated, the tray is placed in the reactor chamber and the PVD coating process is carried out. Next, the coated substrate is mounted in the electrocatalyser device.

In any case, the aforementioned porous substrate with the coating based on oxides, nitrides or hydroxides of transition metals as a semiconductor has a valence band energy level substantially below the oxidation potential of H₂O and a conduction band level above the reduction potential of hydrogen at the standard hydrogen electrode (SHE), which facilitates water oxidation at the anode and hydrogen reduction at the cathode during the electrocatalysis process, allowing both dynamic H₂ generation and static H₂ generation involving simultaneous storage with cumulative electronic capacitance. Oxidation-reduction is performed by a Schottky potential barrier mechanism, which occurs when the Fermi energy levels at the phase boundary between the TiO₂ semiconductor and the carbon conductor are equalised, leading to a marked decrease in the electron delivery potential and the suitable level of potential for water oxidation.

### DESCRIPTION OF THE DRAWINGS

To complement the description that is being made and for the purpose of helping to better understand the features of the invention, there are attached to this specification, as an integral part thereof, drawings which depict, in an illustrative and non-limiting manner, the following:
Figure 1 shows a schematic elevation and section view of an exemplary embodiment of the electrolyser device object of the present invention, specifically an example with a body in the form of a trough and electrodes in the form of blocks separated by an intermediate space with a central membrane;
Figure 2 shows a schematic section view of another example of the electrolyser device of the invention, in this case an example with a body in the form of a circular single cell, in which the arrangement of the electrodes with the porous coated substrate separated by membranes and meshes can be seen;
Figures 3, 4 and 5 show respective enlarged views of details A, B and C indicated in figure 2 where the arrangement of the different types of meshes between the coated porous substrate layers and the separating membrane defining the electrodes can be seen;
Figure 6 shows a plan view of the example of the device with a single-cell body shown in the section of Figure 2, according to section D-D;
Figures 7 and 8 show schematic sectional views, according to a vertical section and a cross-section, respectively, of another example of the electrolyser device of the invention, in this case an example with a body in the form of a honeycomb with electrodes formed by concentric tubes; and
Figure 9 shows a schematic depiction of the structure of the porous substrate with the coating that the electrodes of the device comprise.

### PREFERRED EMBODIMENT OF THE INVENTION

In view of the aforementioned figures, and in accordance with the numbering adopted, various examples of non-limiting exemplary embodiments of the electrolyser device of the invention for carrying out the method of producing and storing hydrogen by means of heterogeneous catalytic electrolysis described in preceding sections, which comprises the parts and elements detailed below, can be seen therein.

Therefore, as seen in said figures, the electrolyser device (1) of the invention is of the type comprising, in a known way, a body (2), either airtight or not and of variable shape, defining a housing (3) suitable for containing water and/or a saline solution or electrolyte, which is introduced through an inlet connection or manifold (18), and comprising respective outlet ports for the gases generated, namely a first hydrogen H₂ outlet port (4) and a second oxygen O₂ outlet port (5), and in which, in addition, at least two electrodes (6, 7) connected to a direct current power source (not shown) with a potential slightly higher than the potential of decomposition of water (H2O) into its constituent elements H₂ and O₂, are provided.

Furthermore, on the basis of said known configuration, the electrocatalyser device (1) is distinguished, essentially, in that the structure of said electrodes (6, 7) comprises a conductive porous substrate (8) and a semiconductor formed by a coating layer (9) of the porous substrate (8) based on oxides, nitrides or hydroxides of transition metals.

Preferably, the porous substrate (8) of the electrodes (6, 7) is activated carbon. Furthermore, preferably, the coating layer (9) of the porous substrate (8) consists of titanium dioxide.

Although said titanium dioxide coating layer (9) may be incorporated in an allotropic form of rutile, brookite or amorphous, or a combination of two or all three of same, it is preferably titanium dioxide in its anatase form.

Preferably, the porous substrate (8) must be granular with particles having millimetre dimensions, for example 2 to 3 mm, although nano- and micro-structured activated carbon reliefs in powder form with particles having micrometre dimensions can also be used.

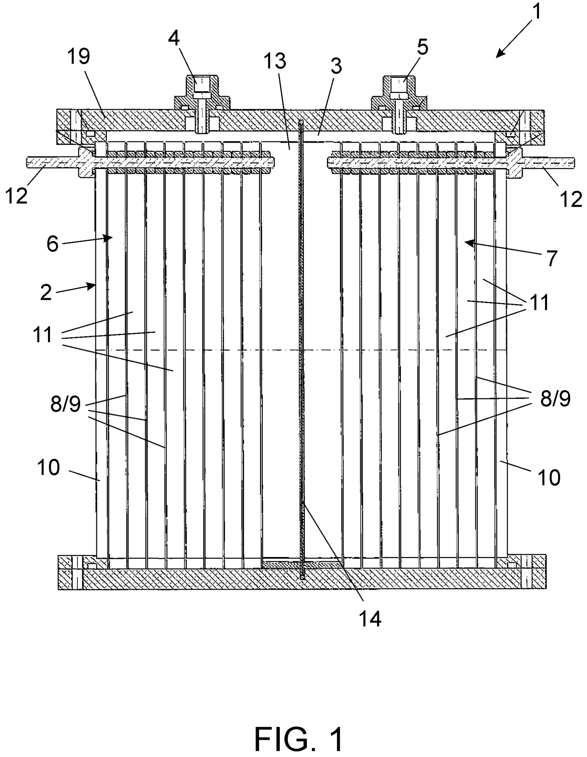

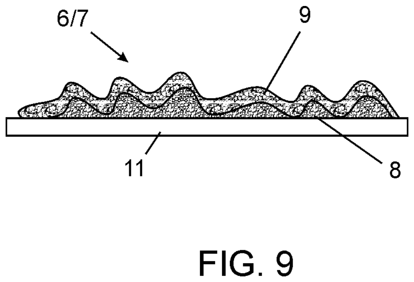

Referring to Figure 1, it can be seen how, in a preferred embodiment, the body (2) of the device has a configuration in the form of a trough or tank configuration with electrically insulating walls (10), for example stainless steel with an internal coating of a non-conductive material, such as rubber, acrylic, or other, inside which several perforated metal plates (11) are located, placed in respective groups with a specific separation and the spaces between them in the porous substrate (8) filled with the semiconductor coating (9). Figure 9 shows a schematic depiction of said structure of the electrodes (6, 7).

Furthermore, said metal plates (11) are connected to a cable or connecting rod (12) such that, together with the coated porous substrate (8, 9), each group of them forms a block acting, respectively, as a positive electrode (6) and as a negative electrode (7), in accordance with the oxidation or reduction function assigned to each block in the electrolyser (1).

Said blocks or electrodes (6, 7) are in turn separated from each other by an intermediate space (13) filled with water or electrolyte.

Preferably, an ion separating membrane (14), preferably a Nafion-type membrane (14), is provided approximately at the centre of said intermediate space (13), although it is not ruled out that the existence of said membrane (14) is not necessary.

In other embodiments not shown in the figures, instead of consisting of two blocks of metal plates (11) with an intermediate space (13) as described and shown in Figure 1, the electrodes (6, 7) are incorporated in series, i.e., as anodes sequenced from cathodes with or without a separation between them, and with a separating membrane (14) and/or a mesh insulation (15) between them that prevents short-circuiting between anode and cathode, as well as electrodes arranged as anodes and cathodes in pairs, trios, quartets or any other type of grouping, always with a membrane (14) or other means of insulation between anode and cathode to free the system from electrical leaks or short circuits.

Preferably, the separating membrane (14) is of the Nafion type, however, it is not ruled out that it may consist of another type of separating membrane, for example, PEM membranes (proton separating membranes) or anionic separating membranes (AEM).

In any case, the body (2) in the form of a trough in this example of the electrolyser (1) with electrodes (6, 7) in the form of blocks of metal plates (11) is closed at the top by a lid (19) with two through holes defining the respective outlet ports (4, 5) provided for the evacuation of the gases generated, specifically an H₂ outlet port (4) corresponding to the block which determines the cathode electrode (6) or negative pole where the H₂ is generated, and another O₂ outlet port (5) corresponding to the anode electrode (7) or positive pole where the O₂ is generated, and where both gases can be collected and taken to storage tanks or wherever convenient for the utilisation thereof through pipes and hoses (not shown), although the O₂ outlet port (5) of the anode cavity (7) where the O₂ is generated can be opened to the atmosphere.

In any case, preferably both the H₂ outlet port (4) and the O₂ outlet port (5) and the connections (12) connecting the electrolyser (1) to the power source are suitably sealed to make them airtight, e.g. by means of glue.

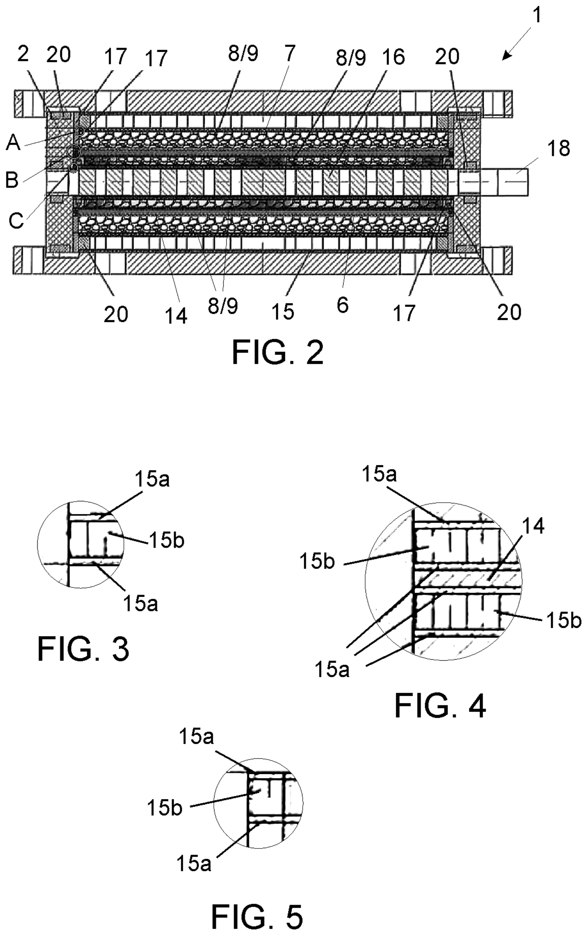

Referring to Figures 2 to 6, it can be seen how, in another embodiment, the body (2) of the electrolyser device (1) may consist of a single-cell body with a variable footprint configuration, for example, circular, as in the example shown, but it can also be hexagonal, square, octagonal or other polygon types, being electrically connected by means of single pole or double pole plates in series or parallel, to obtain the classic cell stack structure.

In this case, the plates acting as positive (7) and negative (6) electrodes consist of, in turn, perforated strips (16) and fine meshes (15) covering the porous substrate (8) with a coating (9) and are separated by a Zirfon^{®}-type polymer membrane (14) which prevents the mixing of the generated gases, H₂ and O₂, which are released, like in the previous case, through the respective O₂ outlet port (5) and H₂ outlet (4) in the thus separated anode and cathode chambers.

More specifically, in a preferred embodiment, each electrode comprises, housed between respective perimeter rings (17), an upper one, an intermediate one and a lower one, two porous substrate layers (8) with a coating (9) which, in turn, are covered at the top and bottom by respective groups of layers of meshes (15), specifically formed by a layer of fine mesh (15a), a layer of perforated mesh (15b) and a layer of fine mesh (15a) by way of a sandwich, as shown in the details in Figures 3 and 5, both sets being separated, in turn, by the membrane (14), as shown in detail in Figure 4. Furthermore, the hydrogen outlet port (4) and oxygen outlet port (5) are provided with a sealing gasket (20).

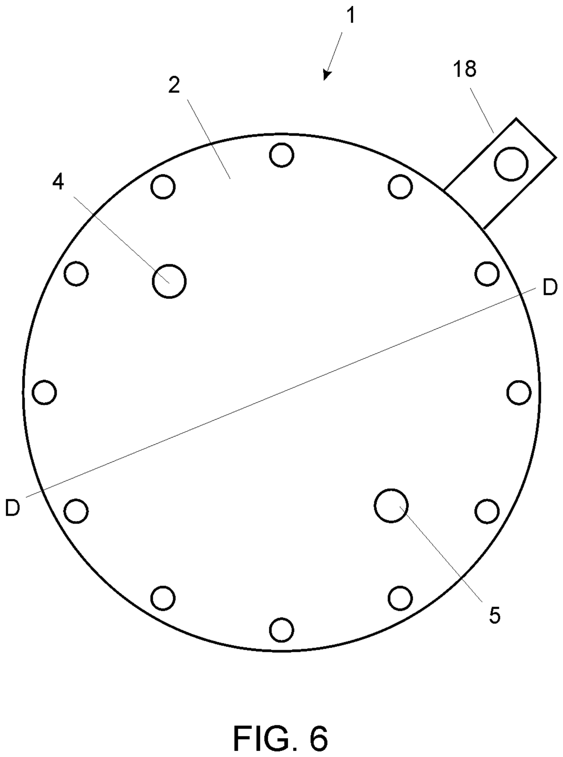

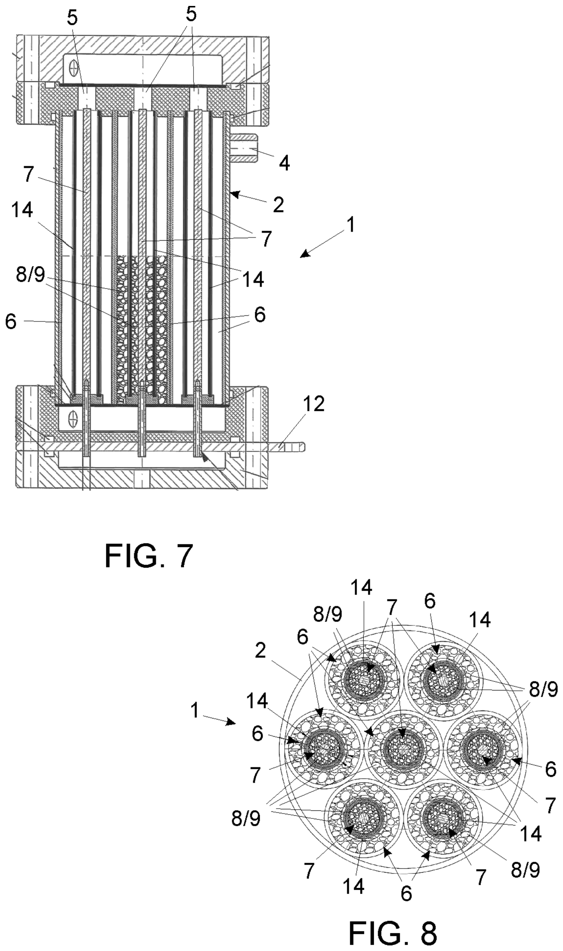

In turn, referring to Figures 6 and 7, it can be seen how, in another embodiment, the body (2) of the electrolyser device (1) may be in the form of a honeycomb, the structure of which corresponds to a body or casing, inside which are placed the electrodes, anodes (7) and cathodes (6) filled with the porous substrate (8) with a coating (9), being separated by the membrane (14), which serves as insulation between them, allowing OH- ions to pass through and preventing H+ protons from passing through.

In this embodiment, the electrodes (6, 7) are formed from concentric tubes neatly placed in the form of a honeycomb, inside which the electrolyte and the gases produced during electrolysis circulate.

Said tubes, in turn, are connected to the terminals of the power source (not shown), at the respective positive and negative poles. The electrolyte, alkaline solution, is introduced from an external tank or pump to a manifold (18) provided for this purpose in the body (2) of the electrolyser, from where it will pass through the innermost perforated tube; this electrode is connected to the positive pole of the electrical power source. In this case, it will act as an anode (7). The water inside same will oxidise and separate the O₂, which will continue as a gaseous flow until it reaches the exhaust manifold, from where it will be released into the atmosphere. The H₂ produced by the splitting of water will then be generated at the cathode, where the electrons necessary for reduction will arrive. This cathode (6) will be formed by the concentric outer tube, separated from the anode tube (7) by the porous substrate (8) with a coating (9) and by the separating membrane (14). The H₂ gas will be collected at the hydrogen exhaust outlet (4) and from there is evacuated through pipes or hoses for storage or use.

Though not depicted, the electrolyser device (1), as well as electrical interconnections and transformation, rectification, safety, control and electrical measurement equipment, also comprises at least one direct current power source, preferably from renewable energy sources, such as: solar panels, hydroelectric sources, marine sources, including wave power, tidal power, sea temperature gradient power, marine current power, wind power, geothermal power, or others, and where, in any case, the power supply potential for each cell must be higher than the characteristic delivery overpotential for the materials involved in electrocatalysis.

Optionally, the device (1) also comprises automation apparatus.

Optionally, the device (1) also comprises at least one system for storing the H₂ produced and/or the O₂ which may be for storage in gaseous form, in liquid form for cryostorage in dewars, or in solid form in metal hydrides or microspheres, and without ruling out storage in a solid state of aggregation, for which temperatures must be cryogenic, below -259.2°C.

Optionally, the device (1) may also comprise: extraction, vacuum and pumping equipment; conveyance and evacuation pipes; filtering and dehumidification means, separators, valves and purifiers; cooling systems, demisters, water feed pumps and dryers.

Having sufficiently described the nature of the present invention, as well as the manner in which it may be put into practice, it is not considered necessary to provide further explanation for a person skilled in the art to understand its scope and the advantages derived therefrom.

## Claims

1. A method for producing and storing hydrogen by means of heterogeneous catalytic electrolysis, specifically by means of the electrocatalysis of water (H₂O), both freshwater and seawater, for the decomposition thereof into oxygen (O₂) and hydrogen (H₂) by means of a direct electric current connected by means of electrodes to an electrolyte or saline solution, wherein the electrodes are separated by an intermediate space filled with water or electrolyte, there being a membrane in the centre of said intermediate space that allows OH- ions to pass through and prevents H+ protons from passing through, being **characterised by** comprising, in said electrodes, the use of a preferably, but not exclusively, very rough structure defined by a porous substrate and a semiconductor formed by a coating layer applied to said porous substrate based on oxides, nitrides or hydroxides of transition metals with a valence band energy level substantially above the oxidation potential of H₂O and the conduction band level below the reduction potential of hydrogen in the standard hydrogen electrode (SHE), such that it allows both dynamic H₂ generation and static H₂ generation involving simultaneous storage with cumulative electronic capacitance, the semiconductor coating layer being applied, through a layer of metal, to the porous substrate by means of physical vapour deposition or multi-arc PVD.

2. The method for producing and storing hydrogen by means of heterogeneous catalytic electrolysis according to claim 1, **characterised in that** the porous substrate used in the electrodes is activated carbon.

3. The method for producing and storing hydrogen by means of heterogeneous catalytic electrolysis according to claim 2, **characterised in that** the coated activated carbon substrate particles have millimetre dimensions of 2 to 3 mm.

4. The method for producing and storing hydrogen by means of heterogeneous catalytic electrolysis according to claim 2, **characterised in that** the porous activated carbon substrate consists of nano- and micro-structured reliefs in powder form.

5. The method for producing and storing hydrogen by means of heterogeneous catalytic electrolysis according to any of claims 1 to 4, **characterised in that** the coating layer applied to the porous substrate is an oxide of any transition metal of the periodic table from among V, Cr, Mn, Fe, Co, Ni, Cu, Zr, Nb, Mo, Tc, Ru, Rh, Ag, Hf, Ta or W.

6. The method for producing and storing hydrogen by means of heterogeneous catalytic electrolysis according to any of claims 1 to 4, **characterised in that** the coating layer applied to the porous substrate consists of titanium dioxide.

7. The method for producing and storing hydrogen by means of heterogeneous catalytic electrolysis according to claim 6, **characterised in that** the titanium dioxide coating layer is applied in its anatase form.

8. The method for producing and storing hydrogen by means of heterogeneous catalytic electrolysis according to claim 6, **characterised in that** the titanium dioxide coating layer is applied in its allotropic form of rutile, brookite or amorphous, or a combination of two or all three of same.

9. The method for producing and storing hydrogen by means of heterogeneous catalytic electrolysis according to claim 6 or 7, **characterised in that** the TiO₂ coating layer is applied to the porous support by means of thermal deposition, by reactive sputtering, chemical vapour deposition, spin coater, sol-gel, electroplating, atomic beam epitaxy, molecular beam epitaxy, CVD or plasma-assisted CVD.

10. The method for producing and storing hydrogen by means of heterogeneous catalytic electrolysis according to any of claims 6 to 9, **characterised in that** the TiO₂ coating layer is applied to only a portion or half of the porous substrate.

11. The method for producing and storing hydrogen by means of heterogeneous catalytic electrolysis according to any of the preceding claims, **characterised in that** the conformation of said electrodes with said very rough structure comprises at least one drying phase for drying the porous substrate prior to the application of the coating layer.

12. The method for producing and storing hydrogen by means of heterogeneous catalytic electrolysis according to claim 11, **characterised in that** the pre-drying phase for previously drying the porous substrate is carried out with the substrate placed on a tray and by means of ultrasonic and air drying or in muffle furnaces or drying ovens.

13. The method for producing and storing hydrogen by means of heterogeneous catalytic electrolysis according to any of the preceding claims, **characterised in that** the potential and the direct electrical current that is applied comes from renewable, sustainable or alternative energy sources, such as: solar panels, hydroelectric sources, marine sources, including wave power, tidal power, sea temperature gradient power, marine current power, as well as wind power, geothermal power, or others.

14. The method for producing and storing hydrogen by means of heterogeneous catalytic electrolysis according to any of the preceding claims, **characterised in that** in hydrogen generation or, the H₂ is immediately released during external electrical power supply.

15. The method for producing and storing hydrogen by means of heterogeneous catalytic electrolysis according to any of claims 1 to 13, **characterised in that** in the static hydrogen generation or the simultaneous H₂ storage with cumulative electronic capacitance, the H₂ is stored within the porous structure of the substrate during and after external electrical power supply.

16. The method for producing and storing hydrogen by means of heterogeneous catalytic electrolysis according to claim 15, **characterised in that** the extraction of H₂ occurs after the electrical power supply as appropriate, either naturally or in a forced manner, by means of an external force, such as temperature, external agitation movements such as swaying, spinning, mechanical vibrations, blowing, suction, ultrasound, drainage and pumping, or by internal agents such as overpressure.

17. A device for producing and storing hydrogen by means of heterogeneous catalytic electrolysis which, comprising a body (2) that defines a housing (3) for containing water or an electrolyte, which is introduced through an inlet connection or manifold (18), and comprises outlet ports for the gases generated, a hydrogen H₂ outlet port (4) and an oxygen O₂ outlet port (5), and at least two electrodes (6, 7) connected to a direct current power source with a potential slightly higher than the potential of decomposition of water (H₂O) into its constituent elements H₂ and O₂, wherein said electrode blocks (6, 7) are located separated from each other by an intermediate space (13) filled with water or electrolyte, there being a membrane (14) at the centre of said intermediate space (13) that allows OH- ions to pass through and prevents H+ protons from passing through, is **characterised in that** the structure of said electrodes (6, 7) comprises a conductive porous substrate (8) and a semiconductor formed by a coating layer (9) of the porous substrate (8) based on oxides, nitrides or hydroxides of transition metals, the semiconductor coating layer (9) being applied, through a layer of metal, to the porous substrate (8) by means of multi-arc physical vapour deposition or PVD.

18. The device for producing and storing hydrogen by means of heterogeneous catalytic electrolysis according to claim 17, **characterised in that** the porous substrate (8) of the electrodes (6, 7) is activated carbon.

19. The device for producing and storing hydrogen by means of heterogeneous catalytic electrolysis according to claim 17 or 18, **characterised in that** the coating layer (9) of the porous substrate (8) is titanium dioxide.

20. The device for producing and storing hydrogen by means of heterogeneous catalytic electrolysis according to claim 19, **characterised in that** said titanium dioxide coating layer (9) is titanium dioxide in its anatase form.

21. The device for producing and storing hydrogen by means of heterogeneous catalytic electrolysis according to any of claims 17 to 20, **characterised in that** the porous substrate (8) has nano- and micro-structured reliefs.

22. The device for producing and storing hydrogen by means of heterogeneous catalytic electrolysis according to any of claims 17 to 21, **characterised in that** the body (2) of the device has a configuration in the form of a trough with electrically insulating walls (10) inside which there are located several perforated metal plates (11), placed in respective groups with a specific separation and the spaces between them in the porous substrate (8) filled with the semiconductor coating (9).

23. The device for producing and storing hydrogen by means of heterogeneous catalytic electrolysis according to claim 22, **characterised in that** said metal plates (11) are connected to a cable or connecting rod (12) such that, together with the coated porous substrate (8, 9), they form two blocks that act, respectively, as a positive electrode (6) and as a negative electrode (7), in accordance with the oxidation or reduction function assigned to each block in the electrolyser (1).

24. The device for producing and storing hydrogen by means of heterogeneous catalytic electrolysis according to any of claims 17 to 21, **characterised in that** the electrodes (6, 7) are incorporated in series as anodes and cathodes, with or without a separation between them and a separating membrane (14) and/or a mesh insulation (15).

25. The device for producing and storing hydrogen by means of heterogeneous catalytic electrolysis according to claim 24, **characterised in that** the electrodes are incorporated arranged as anodes and cathodes in pairs, trios, quartets or any other type of grouping, with a membrane (14) or other means of insulation between anode and cathode.

26. The device for producing and storing hydrogen by means of heterogeneous catalytic electrolysis according to any of claims 22 to 25, **characterised in that** the body (2) in the form of a trough is closed at the top by a lid (19) with two through holes defining the respective outlet ports (4, 5), one being the H₂ outlet (4) corresponding to the block which determines the cathode electrode (6) or negative pole where the H₂ is generated, and the other one being the O₂ outlet (5) corresponding to the anode electrode (7) or positive pole where the O₂ is generated.

27. The device for producing and storing hydrogen by means of heterogeneous catalytic electrolysis according to any of claims 17 to 21, **characterised in that** the body (2) is a single-cell body with a variable footprint configuration, which may be circular, hexagonal, square, octagonal or other polygon types, electrically connected by means of single pole or double pole plates in series or in parallel, by way of a cell stack structure.

28. The device for producing and storing hydrogen by means of heterogeneous catalytic electrolysis according to claim 27, **characterised in that** it comprises, as positive (7) and negative (6) electrodes, plates consisting of perforated strips (16) and fine meshes (15) that cover the porous substrate (8) with a coating (9) and are separated by a Zirfon^{®}-type polymer membrane (14).

29. The device for producing and storing hydrogen by means of heterogeneous catalytic electrolysis according to any of claims 17 to 21, **characterised in that** the body (2) has a honeycomb shape within which it incorporates the electrodes, anodes (7) and cathodes (6), filled with the porous substrate (8) with coating (9), these being separated by the membrane (14).

30. The device for producing and storing hydrogen by means of heterogeneous catalytic electrolysis according to claim 29, **characterised in that** the electrodes (6, 7) are concentric tubes placed in a honeycomb shape, inside which the electrolyte and the gases produced during electrocatalysis circulate.

31. The device for producing and storing hydrogen by means of heterogeneous catalytic electrolysis according to any of claims 17 to 30, **characterised in that** the direct current power source comes from renewable energy sources, such as: solar panels, hydroelectric sources, marine sources, including wave power, tidal power, sea temperature gradient power, marine current power, wind power, geothermal power, or others.

32. The device for producing and storing hydrogen by means of heterogeneous catalytic electrolysis according to any of claims 17 to 31, **characterised in that** it comprises a system for storing the H₂ produced and/or O₂ for storage in gaseous form, in liquid form for cryostorage in dewers, or in solid form in metal hydrides or microspheres, or in solid state of aggregation.

33. The device for producing and storing hydrogen by means of heterogeneous catalytic electrolysis according to any of claims 17 to 32, **characterised in that** it comprises **characterised in that** it comprises extraction, vacuum, drainage or alternative emptying and filling equipment, transport and evacuation pipes; filtering and dehumidification means, separators, valves and purifiers; cooling systems, demisters, water feed pumps and dryers.

34. The device for producing and storing hydrogen by means of heterogeneous catalytic electrolysis according to any of claims 17 to 33, **characterised in that** the porous substrates are non-conductive, such as zeolites, sponge or cellular concrete, metal sponges, very rough metal substrates and others.

35. The device for producing and storing hydrogen by means of heterogeneous catalytic electrolysis according to any of claims 17 to 34, **characterised in that** it comprises a device external to or incorporated in the same structure of the electrocatalyser that harnesses the H₂s and O₂ gases or only the H₂s produced and stored, as well as the cumulative capacitance, to make it operate in what could be called reverse mode, as a fuel cell.
